# EUROPÄISCHE PATENTSCHRIFT

(11) **EP 1 400 124 B1**
(45) Veröffentlichungstag und Bekanntmachung des Hinweises auf die Patenterteilung: **05.08.2009**
(21) Anmeldenummer: 02703510.4
(22) Anmeldetag: 31.01.2002
(51) Int. Cl.: H04N 7/24

(54) **VERFAHREN ZUR VERBESSERUNG DER FUNKTIONALITÄT DER BINÄREN REPRÄSENTATION VON MPEG-7 UND ANDEREN XML-BASIERTEN INHALTSBESCHREIBUNGEN**
METHOD FOR IMPROVING THE FUNCTIONS OF THE BINARY REPRESENTATION OF MPEG-7 AND OTHER XML-BASED CONTENT DESCRIPTIONS
PROCEDE POUR AMELIORER LA FONCTIONNALITE DE LA REPRESENTATION BINAIRE DE DESCRIPTIONS DE CONTENU MPEG-7 ET BASEES SUR D'AUTRES LANGAGES XML

(30) Priorität: 01.02.2001 DE 10104537
(43) Veröffentlichungstag der Anmeldung: 24.03.2004
(73) Patentinhaber: SIEMENS AKTIENGESELLSCHAFT, 80333 München (DE)
(72) Erfinder: HUTTER, Andreas, 81539 München (DE); HEUER, Jörg, 81539 München (DE); NIEDERMEIER, Ulrich, 80796 München (DE)
(86) Internationale Anmeldenummer: PCT/DE2002/000343
(87) Internationale Veröffentlichungsnummer: WO 2002/062070

(56) Entgegenhaltungen:
- EP-A- 0 928 070
- EP-A- 1 122 655
- EP-A- 1 223 759
- WO-A-97/34240
- ISO/IEC JCT1/SC29/WG11: "Text of ISO/IEC 15938-1 Information technology - Multimedia content description interface - Part 1 Systems" ISO/IEC JTC1/SC29/WG11 N3701, Oktober 2000 (2000-10), XP002172899
- J. HEUER, A. HUTTER, U. NIEDERMEIER: "Improved filtering functionality for the binary representation of MPEG-7 descriptions (BIM)" ISO/IEC JTC1/SC29/WG11/M6795, Januar 2001 (2001-01), XP002333452 PISA
- C. THIÉNOT, C. SEYRAT, G. PAU: "BiM navigation path improvement" ISO/IEC JTC1/SC29/WG11/M6854, Januar 2001 (2001-01), XP002333453 PISA

## Beschreibung

Die Erfindung betrifft die Codierung und Decodierung von XML-basierten strukturierten Dokumente, wie sie beispielsweise bei MPEG-7 vorgesehen sind. Die XML (extensible markup language) ist ein Standard für die Definition von Dokumentenstrukturen und dient zur Darstellung strukturierter Daten in einem Textfile und bilde beispielsweise die Basis für die Sprache XHTML. Diese XML-basierten strukturierten Dokumente basieren auf einer Menge von strukturierten Elementen - im Folgenden auch "Schema" genannt - wie sie zum Beispiel mit Hilfe von Document Type Definition (DTD), XML-Schema oder Multimediadescription Schemes (DS) spezifiziert werden können.

Aus [1] ist beispielsweise das binäre Format von MPEG-7-Dateien und der Aufbau von Navigationspfaden mit Hilfe von Baumverzweigungscodetabellen bekannt.

Die Erfindung betrifft die Optimierung der Codierung strukturiert XML-Dokumente. Die der Erfindung zugrunde liegende Aufgabe besteht nun darin, Verfahren zur Verbesserung der Funktionalität der binären Repräsentation von XML-basierten Inhaltsbeschreibungen, insbesondere von MPEG-7-Dokumenten, anzugeben, bei dem die zu übertragende Datenmenge möglichst gering ist und Suchvorgänge innerhalb des codierten Dokuments sowie die Weiterverarbeitung des codierten Dokuments möglichst einfach sind.

Diese Aufgabe wird erfindungsgemäß durch die Merkmale des Patentanspruchs 1 gelöst. Die weiteren Ansprüche betreffen vorteilhafte Weiterbildungen der erfindungsgemäßen Verfahren.

Aus dem oben erwähnten ISO/IEC-Entwurf [1] geht unter anderem hervor, dass die Struktur eines XML-Dokuments als Datenbaum aufgefasst werden kann, wobei jedes Element der Beschreibung einen Knoten in diesem Baum entspricht. Die Struktur der Knoten wird durch die Definition im Schema, das dem Dokument zugrunde liegt, festgelegt. Insbesondere Typ und Anzahl der Kind-Elemente werden dadurch definiert. Der Prototyp eines solchen Knotens ist beispielsweise auf Seite 19 von [1] dargestellt. Dieser Baumstrukturknoten besteht aus dem Namen des Elements oder komplexen Typs, einem Feld mit Codeworten TBC (Tree Branch Code), die zur Referenzierung der Kind-Elemente dienen, und den Baumzweigen, die die Referenzen auf die entsprechenden Kind-Elemente darstellen. Aus [1] kann ebenfalls entnommen werden, dass die TBCs in zwei Komponenten, nämlich einer Schemaverzweigung und einer Positionsinformation aufgeteilt sind, wobei die Schemainformation aus den Elementen abgeleitet wird, die im Schema als Kindelemente auftreten, während die Positionsinformation die Positionsinformation für diejenigen Elemente enthält, die mehrfach auftreten können. Die möglichen Arten von Kindelementen sind dabei, Elemente vom Typ Complex Type, die wiederum Kindelemente enthalten können, oder aber Elemente vom Typ Simple Type bzw. Attribute, die keine Kind-Elemente enthalten können. Die Länge des Feldes #position wird durch die maximale Anzahl ("maxOccurs") des betreffenden Elements festgelegt ,die im Schema spezifiziert ist.

Um sich im Dokument zu bewegen, werden die TBCs, also die SchemaBranchCodes und gegebenenfalls die PositionCodes aneinandergereiht, was einen Pfad in dem Dokument ergibt. Ist das gewünschte Element erreicht, wird der letzte Code in der Tabelle eingefügt. Falls das gewünschte Element keine weiteren Kinder haben kann, also ein Attribut oder ein Simple Type ist, dann ist dieser Termination Code nicht notwendig und wird nicht gesendet. In diesem Fall wird anschließend das Attribut oder das Simple Type Element codiert übertragen. Die Erfindung besteht nun im Wesentlichen darin, dass stringbasierte Datentypen, also mittelbar oder unmittelbar vom Datentyp String abgeleitete Datentypen, deren mögliche Inhalte über reguläre Ausdrücke [4] spezifiziert werden und die beispielsweise als baumartige Struktur dargestellt werden können, derart codiert werden, dass Signalbits (Flags) für optionale Teile und Längeninformationen der Codes variabler Länge nach einem allgemeinen Verfahren in einer festgelegten Reihenfolge an den Anfang des erzeugten Bitstroms gestellt werden und dadurch zum einen die Verarbeitung der im Datentyp enthaltenen Information durch Vorabinformation über den Inhalt vereinfacht werden kann sowie die Suche nach Daten durch Aussortieren und Bitmaskenabfragen beschleunigt werden kann. Ferner betrifft ein nicht zur Erfindung gehörendes Beispiel eine effizientere Codierung der #position Feldes durch Vergabe von bestimmten Codefragmenten für jede Gruppierung von Elementen entsprechend der Definition des Datentyps.

Die Erfindung wird nachfolgend anhand der in den Zeichnungen dargestellten Beispielen näher erläutert. Dabei zeigt:
- Figur 1: ein reguläre Ausdruck zur Definition eines stringbasierten Datentyps mit mehreren ineinander verschachtelten optionalen Teilen,
- Figur 2: eine erste Repräsentation des in Figur 1 dargestellten regulären Ausdrucks zusammen mit dem zugehörigen erzeugten Bitstrom für den stringbasierten Datentyp,
- Figur 3: eine weitere Repräsentation des in Figur 1 dargestellten regulären Ausdrucks zusammen mit dem zugehörigen Bitstrom für den stringbasierten Datentyp zur Erläuterung der Erfindung und
- Figur 4: eine Repräsentation für einen regulären Ausdruck zur Erläuterung der Verbesserung der Codiereffizienz.

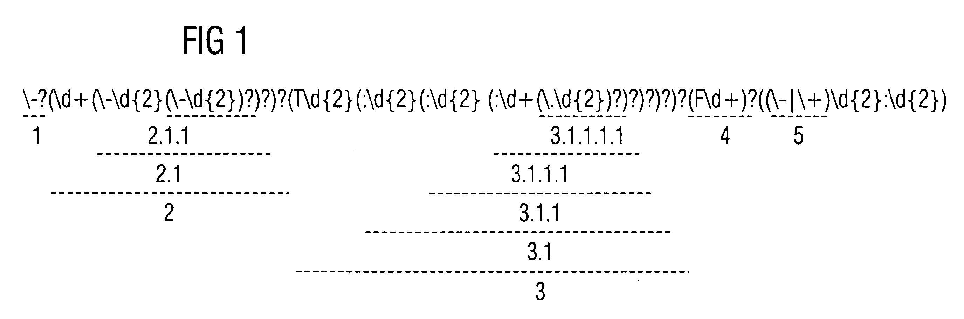

In Figur 1 ist eine durch einen regulären Ausdruck angegebene Beschreibung eines stringbasierten Datentyps mit optional vorhandenen Teilen angegeben. Die in der Definition des Datentyps enthaltenen regulären Ausdrücke sind beispielsweise in [4] näher spezifiziert. Unterhalb regulären Ausdrucks sind einfache optional vorhandene Teile 1, 4 und 5 sowie ineinander verschachtelte optionale Teile 2, 2.1, 2.1.1 bzw. 3, 3.1, 3.1.1, 3.1.1.1, und 3.1.1.1.1 durch entsprechende Striche angedeutet.

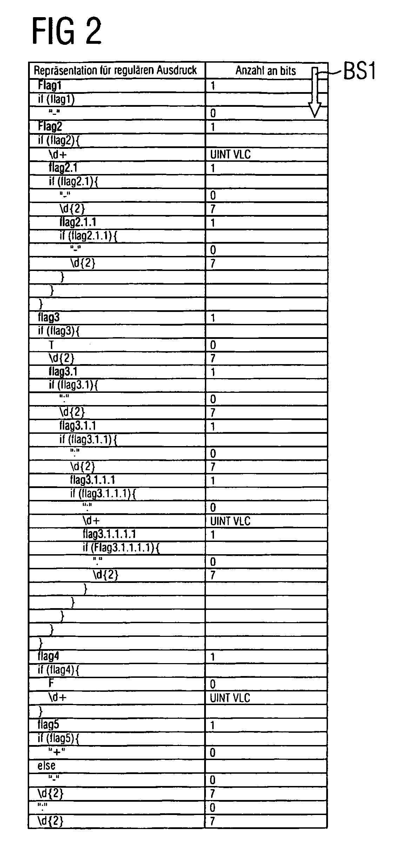

In Figur 2 ist eine Repräsentation RRA1(T(S)) für einen durch den regulären Ausdruck S von Figur 1 spezifizierten stringbasierten Datentyp T(S) mit Hilfe von entsprechend der optionalen Teile nummerierten Flags dargestellt, wobei hier, wie bislang gemäß [2] üblich, unmittelbar nach dem jeweiligen Flag eine entsprechende Abfrage des Flags sowie die optional enthaltenen Informationsdaten folgen. Parallel zur Repräsentation RRA1(T(S)) ist von oben nach unten ein Bitstrom BS1 zeilenweise mit der jeweiligen Anzahl an Bits angegeben. Wie im obigen Beispiel dargestellt können die Klassen, zum Beispiel \d{2}, der autorisierten Zeichen, im Folgenden auch Datenfelder genannt, dann mit spezifischen binären Repräsentationen codiert werden. Datenfelder variabler Länge wie zum Beispiel "\d+" werden hierbei mit Codes variabler Länge codiert, wobei bestimmte Bits, beispielsweise jedes neunte Bit, signalisieren, ob weitere, zum Beispiel neun Bits, folgen.

In dem bestehenden Verfahren zur Codierung von stringbasierten Datentypen werden die regulären Ausdrücke genutzt, um die Struktur der Instanzierung zu codieren. Jedoch muss zur Auswertung von codierten Daten diesen Datentyps der gesamte Bitstrom eingelesen werden, festzustellen zu können, ob und wo die für den Empfänger relevanten Teile, das heißt die entsprechenden Datenfelder, im Datenstrom enthalten sind. Des weiteren ist es dem Decoder nicht möglich, die zur Decodierung und Speicherung der Datenfelder erforderlichen Ressourcen vorab zu bestimmen und zu reservieren, sondern er muss dies schritthaltend mit der Decodierung des Bitstroms tun.

Eine Repräsentation für einen regulären Ausdruck eines stringbasierten Datentyps ist einem entsprechenden Encoder bzw. Decoder entweder per Festlegung bekannt oder muss diesen entsprechend signalisiert werden.

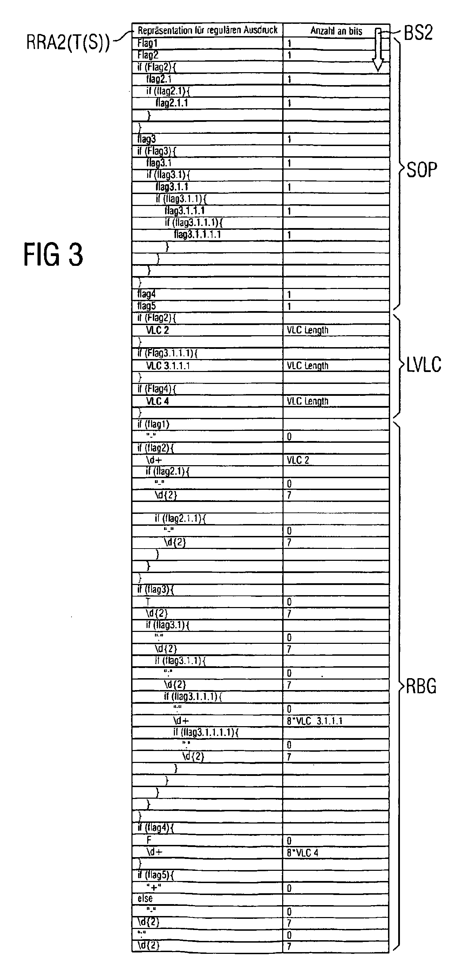

In Figur 3 ist eine entsprechend der Erfindung geänderte Repräsentation RRA2(T(S)) für den durch den regulären Ausdruck S zusammen mit einem entsprechenden weiteren Bitstrom BS2 gezeigt. In diesem Beispiel werden zunächst die Flags SOP für optionale Teile gemäß dem in [2] beschriebenen Codierungsprinzip jedoch hier am Anfang in den Bitstrom BS2 gespeichert, bevor anschließend die Längeninformationen LVLC der Daten variabler Länge abgespeichert werden.

Diese Längeninformation kann dabei beispielsweise wie folgt codiert werden: Die Anzahl an aufeinanderfolgenden Bits, die gleich 1 sind, repräsentieren die Anzahl der verwendeten Datenblöcke für die entsprechende Datenrepräsentation variabler Länge. Besteht der Datenblock wie im obigen Beispiel aus acht Bits, so spezifiziert beispielsweise der binäre Code "1110" eine Datenlänge von 24 Bits, während der binäre Code "10" eine Länge von 8 Bits spezifiziert. Diese berechneten Datenlängen werden im diesem Beispiel mit "8*VLC_X" repräsentiert.

Dadurch, dass in der Erfindung die Signalisierungsbits bzw. Flags für optionale Teile und/oder Längeninformationen der Codes variabler Länge einer festgelegten Reihenfolge, an den Anfang des Bitstroms gestellt werden, kann die Suche nach Daten beschleunigt werden. Da die ersten Flags signalisieren, ob die vorliegenden Daten diejenigen Teile des regulären Ausdrucks enthalten können, nach denen gesucht wird, muss hierzu nicht der gesamte Bitstrom BS2 eingelesen werden. Ferner kann aufgrund der Informationen über die verwendeten Datenfelder und deren Länge am Anfang des Bitstroms der restliche Bitstrom RBS für die Suche mit einem vorausbestimmbaren Bitmuster verglichen werden.

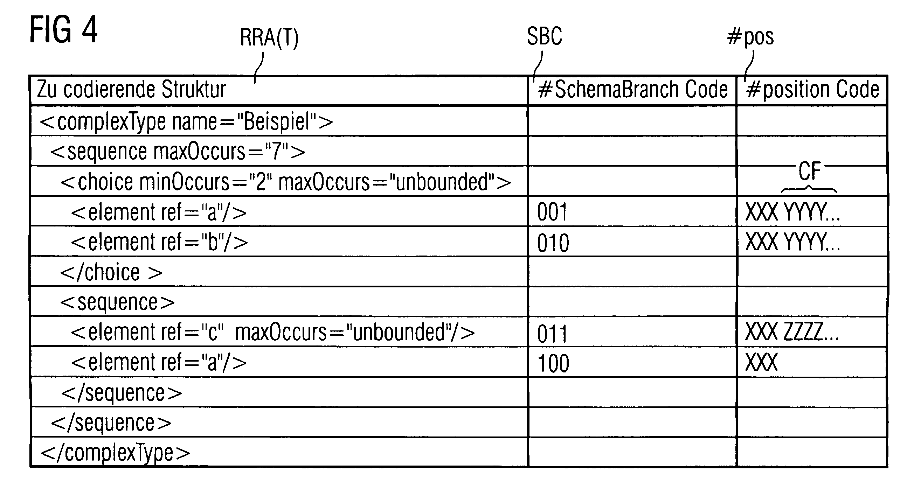

In Figur 4 ist eine Repräsentation einer Definition für einen zu codierenden komplexen Datentyp T parallel zum jeweiligen Schemaverzweigungscode SBC und zum jeweiligen Positionscode #pos dargestellt bzw. gezeigt, wie eine entsprechende Baumverzweigungstabelle aufgebaut ist. Den Elementen eines komplexen Typelements werden SBC zugewiesen, zum Beispiel in der Reihenfolge, in der sie in der Definition auftreten, unabhängig davon, in welcher Gruppierung oder wie tief verschachtelt sie sind. Wenn ein Element vom selben Typ und/oder demselben Namen an zwei oder mehreren, verschiedenen Gruppen innerhalb der Spezifizierung des komplexen Typs auftritt, werden auch verschiedene Codes zugewiesen. Dieser Schemaverzweigungscode SBC legt eindeutig fest, welches Element innerhalb welcher, möglicherweise verschachtelten, Gruppierung codiert wird. Entsprechend der Verschachtelung der Gruppierungen kann der dem Element zugeordnete Positionscode #pos zusammengesetzt werden. Hierbei wird für jede Gruppierung, die ein Vater des zu codierenden Elements ist, in einer festgelegten Reihenfolge, zum Beispiel beginnend mit dem Äußersten, ein Codefragment, zum Beispiel CF, vergeben. Dabei wird, abhängig vom maximal möglichen Auftreten für jede dieser Gruppierungen jeweils eine feste Bitlänge verwendet. Es kann aber auch eine variable Bitlänge, entsprechend der Definition zur Codierung des Positionscodes verwendet werden.

In dem Beispiel von Figur 4 bekommen die Elemente a bis c in der Reihenfolge ihres Auftretens einen Schemaverzweigungscode SBC zugewiesen. Das Element a tritt hier zweimal auf, wobei es beim zweiten Auftreten einen anderen Code "100" anstelle von "001" zugewiesen bekommt. Das Feld für den Positionscode #pos setzt sich hier aus folgenden Komponenten bzw. Codefragmenten zusammen:
- 3 Bits XXX, welche die Position innerhalb der äußeren Sequence-Klammer bestimmen;
- Vielfache von 4 Bits YYYY, welche die Position innerhalb der Choice-Klammer bestimmen und
- Vielfache von 4 Bits ZZZZ, welche die Position unter den Elementen c bestimmen.

Das Beispielverfahren hat gegenüber dem in [3] beschriebenen Verfahren den Vorteil, dass nur die Positionen codiert werden bzw. adressiert werden müssen, an denen die betreffenden Elemente nach der Schemadefinition auch positioniert werden kann. Zudem muss nur für Elemente, die mehrfach instanziiert werden können, auch ein Positionscode übertragen werden. Hierdurch kann eine effizientere Codierung der Beschreibungsstruktur erreicht werden. Des weiteren ergibt sich der wesentliche Vorteil, dass das Dokument um zusätzliche Elemente auf jeder beliebigen Schachtelungstiefe erweitert werden kann, was in dem Verfahren gemäß [3] wegen der sequentiell vergebenen Positionscodes oft nicht möglich ist.

In diesem Dokument sind folgende Veröffentlichungen zitiert:
[1] ISO/IEC CD 15938-1 Information technology - Multimedia content description interface: Systems, ISO/IEC JTC1 SC29/WG11/N3701, La Baule (France), Oktober 2000
[2] Datatype encoding improvements for BiM, Cédric Thiénot, Claude Seyrat, Grégoire Pau, ISO/IEC JTC1 SC29/WG11/M6853, Pisa (Italy), January 2001
[3] BiM navigation path improvements, Cédric Thiénot, Claude Seyrat, Grégoire Pau, ISO/IEC JTC1 SC29/WG11/M6854, Pisa (Italy), January 2001
[4] aus Internet: http://www.w3.org/TR/xmlschema-2/#regexs

## Patentansprüche

1. Verfahren zur Verbesserung der Funktionalität einer binären Repräsentation von XML-basierten Inhaltsbeschreibungen,
bei dem ein auf einem String basierender Datentyp (T(S)), der mit einem regulären Ausdruck (RRA2(T(S))) definiert ist, in Form eines Bitstroms (BS2) derart abgebildet wird, dass Signalisierungsbits (SOP) für optionale Teile und Längeninformationen (LVLC) von Codes variabler Länge in einer festgelegten, aus dem regulären Ausdruck abgeleiteten, Reihenfolge an den Anfang eines Bitstroms (BS2) für Instanziierungen des Stringbasierten Datentyps gestellt werden.

2. Verfahren nach Anspruch 1,
bei dem Daten im Bitstrom in mindestens einer Instanziierung derart gesucht werden, dass zunächst Signalisierungsbits daraufhin überprüft werden, ob sie bestimmte optionale Teile des regulären Ausdrucks überhaupt enthalten.

3. Verfahren nach Anspruch 1,
bei dem Daten im Bitstrom in mindestens einer Instanziierung derart gesucht werden, dass zunächst Signalisierungsbits dazu genutzt werden, vorab im Decoder entsprechende Ressourcen zur Verarbeitung und/oder Speicherung der enthaltenen Datenfelder bereitzustellen.

4. Verfahren nach Anspruch 2 oder 3,
bei dem mit Hilfe der Längeninformation ein Bitmuster für die Suche im restlichen Bitstrom (RBS) gebildet wird.

## Claims

1. Method for improving the functionality of a binary representation of XML-based content descriptions
in which a string-based data type (T(S)) which is defined with a regular expression (RRA2(T(S)) is mapped in the form of a bit stream (BS2) such that signalling bits (SOP) for optional parts and length information (LVLC) of codes of variable length are placed in a defined sequence derived from the regular expression at the start of a bit stream (BS2) for instantiations of the string-based data type.

2. Method according to claim 1
in which data in the bit stream is sought in at least one instantiation in such a way that signalling bits are initially checked for whether they contain specific optional parts of the regular expression at all.

3. Method according to claim 1
in which data in the bit stream is sought in at least one instantiation in such a way that signalling bits are initially used to provide corresponding resources beforehand in the decoder for processing and/or storage of the contained data fields.

4. Method according to claims 2 or 3
in which a bit pattern (RBS) is formed with the aid of length information for the search in the remainder of the bit stream.

## Revendications

1. Procédé pour améliorer la fonctionnalité d'une représentation binaire de descriptions de contenus basées sur le langage XML, dans lequel un type de données (T (S)) basé sur une chaîne, défini à l'aide d'une expression régulière (RRA2(T(S))) est reproduit de telle sorte sous forme d'un train de bits (BS2) que des bits de signalisation (SOP) pour des parties optionnelles et des informations de longueur (LVLC) de codes de longueur variable sont posés en une suite prédéfinie dérivée de l'expression régulière au début d'un train de bits (BS2) pour les instanciations du type de données basé sur une chaîne.

2. Procédé selon la revendication 1, dans lequel des données dans le train de bits sont recherchées dans au moins une instanciation de telle sorte que les bits de signalisation sont d'abord examinés quant au fait qu'ils contiennent des parties optionnelles déterminées de l'expression régulière.

3. Procédé selon la revendications 1, dans lequel des données dans le train de bits sont recherchées dans au moins une instanciation de telle sorte que les bits de signalisation sont d'abord utilisés afin de préalablement mettre à disposition dans le décodeur des ressources correspondantes pour le traitement et/ou la sauvegarde des champs de données contenus.

4. Procédé selon la revendication 2 ou 3, dans lequel à l'aide de l'information de longueur, une configuration binaire est créée pour la recherche dans le reste du train de bits (RBS).
